# EUROPEAN PATENT APPLICATION

(11) **EP 1 462 834 A1**
(43) Date of publication of application: **29.09.2004**
(21) Application number: 04251340.8
(22) Date of filing: 09.03.2004
(51) Int. Cl.: G02B 6/28

(54) **Optical fiber coupler manufacturing method and manufacturing apparatus thereof**

(30) Priority: 17.03.2003 JP 2003071373
(71) Applicant: YKK CORPORATION, Chiyoda-ku, Tokyo (JP)
(72) Inventor: Maruyama, Shinichiro, Kurobe-shi, Toyama 938-0042 (JP); Nakaguchi, Hiroaki, Toyama 938-0031 (JP)
(74) Representative: Luckhurst, Anthony Henry William

(57) **Abstract**

A manufacturing method is provided for enabling efficient manufacture of an optical fiber coupler with satisfactory optical characteristic. Two optical fibers (11,12) of which sheaths (11C,12C) are partly removed are aligned and held to be substantially in parallel and in contact with each other, and then heated and drawn to be fused. During the fusing, a multiplexed light of different wavelengths (132A) is input into either one of the optical fibers and a branching state of the lights output from the optical fibers is detected (132B). In accordance with a cubic function that is found based on a relationship in a previously manufactured optical fiber coupler between a branching ratio (CR) of the wavelengths and a branching ratio difference (ΔCR) at fusion stop point of the optical fibers, fusing process of the in-process optical fiber coupler is stopped when a branching ratio difference (ΔCR) thereof during the fusing process becomes substantially equal to a branching difference (ΔCR₀) that is computed based on the cubic function. The fusion stop timing can be automatically controlled with the cubic function based on measured values so that an optical fiber coupler with a desired branching ratio is highly accurately and easily manufactured.

## Description

### BACKGROUND OF THE INVENTION

### 1. FIELD OF THE INVENTION

The present invention relates to an optical fiber coupler in which a plurality of optical fibers are fused, a manufacturing method and a manufacturing apparatus thereof.

### 2. DESCRIPTION OF RELATED ART

There are various conventional methods for manufacturing an optical fiber coupler in which two optical fibers are partly and longitudinally fused, and then a light input from an end of the optical fiber is output from the other end under a predetermined condition. (See Prior Arts 1 to 5).

Prior Art 1: Japanese Patent Laid-Open Publication NO. Hei 6-148463 (a right column on page 2 to a right column on page 3)

Prior Art 2: Japanese Patent Laid-Open Publication NO. Hei 6-51154 (a right column on page 2 to a left column on page 5)

Prior Art 3: Japanese Patent Laid-Open Publication NO. Hei 6-281842 (a left column on page 3 to a left column on page 4)

Prior Art 4: Japanese Patent Laid-Open Publication NO. Hei 7-27945 (a left column on page 5 to a right column on page 9)

Prior Art 5: Japanese Patent Publication NO. 3074495 (a left column on page 2 to a right column on page 3) In a method disclosed in Prior Art 1, lights of different wavelengths are respectively input into first ends of two optical fibers aligned substantially in parallel, and the two optical fibers are heated and drawn while intensity values of lights of different wavelengths respectively output from second ends opposite to the first ends of the optical fibers are detected. When the detected light intensity values become substantially equal, the heating and drawing processes are stopped. However, in the method disclosed in Prior Art 1, even after the heating and drawing processes are stopped, the optical fibers are further incorporated by residual heat and the volume thereof is contracted by cooling. Therefore, a branching ratio of the manufactured optical fiber coupler might be different from a desired branching ratio.

In methods disclosed in Prior Arts 2 and 3, lights of different wavelengths are into a first end of either one of two optical fibers aligned substantially in parallel, and the two optical fibers are heated and drawn while branching ratios of lights output from second ends of the two optical fibers are detected. When the detected branching ratios become equal to desired branching ratios, the heating and drawing processes are stopped. Thus an optical fiber coupler is manufactured. However, in the methods disclosed in Prior Arts 2 and 3, just like the method in Prior Art 1, a branching ratio of the manufactured optical fiber coupler might be different from a desired branching ratio because of further incorporation due to residual heat, volume contraction due to cooling and the like.

In a method disclosed in Prior Art 4, lights of different wavelengths are respectively input into first ends of two optical fibers aligned substantially in parallel, and heating and drawing processes are stopped when the difference of the output of the lights irradiated from second ends becomes equal to 0 to 50 % of maximum value of the difference of the output. However, in the method disclosed in Prior Art 4, if target branching ratios of manufactured optical fiber coupler are different, desired branching ratios might not be obtained even though a stop point is under control.

In a method disclosed in Prior Art 5, a light of a predetermined wavelength into a first end of either one of two optical fibers aligned substantially in parallel, and the two optical fibers are heated and drawn while a light output from a second end of at least either one of the optical fibers is detected. When a derivative value found by differentiating output value of the detected light becomes zero, the heating and drawing processes are stopped. However, in the method disclosed in Prior Art 5, even though the processes are stopped under automatic control, a desired branching ratio might not be obtained because of further incorporation due to residual heat, volume contraction due to cooling and the like.

As described above, in the method disclosed in Prior Art 1 the fusing operation is stopped when the detected light intensity values become substantially equal, and in the methods disclosed in Prior Arts 2 and 3 the fusing operation is stopped when the branching ratios of the detected lights become equal to the desired branching ratios. Therefore, the branching ratio of manufactured optical fiber coupler might be different from the desired branching ratio because of further incorporation due to residual heat, volume contraction due to cooling and the like. In the method disclosed in Prior Art 4, the fusing process is stopped when the difference of the output of the detected lights becomes equal to 0 to 50 % of maximum value of the difference of the output. Therefore, if target branching ratios of an optical fiber coupler to be manufactured are different, the optical fiber coupler with the desired branching ratio might not be obtained even if manufactured in the same manner. In the method disclosed in Patent Document 5, the fusing process is stopped when the derivative value of the output value of the detected light becomes zero. Therefore, there is a disadvantage, for example, that the desired branching ratio might not be obtained because of further incorporation due to residual heat, volume contraction due to cooling and the like.

### SUMMARY OF THE INVENTION

An object of the present invention is to provide an optical fiber coupler that excellently offers a desired optical characteristic, a manufacturing method and a manufacturing apparatus thereof.

According to the present invention, a method for manufacturing an optical fiber coupler by heating and fusing at least a part of a contacting part of plural optical fibers, the method includes the steps of: inputting lights of different wavelengths into a first end of any one of the plural optical fibers and reading the lights output from second ends opposite to the first end of the plural optical fibers during the fusing process; and stopping the fusing process when a value of a branching ratio difference between the lights of respective wavelengths output from the plural optical fibers becomes substantially equal to a value of a branching ratio difference that is found in accordance with a relational expression representing a relationship in a previously manufactured optical fiber coupler between an branching ratio of the light of either one of the wavelengths and a branching ratio difference from the light of the other wavelength.

In this manufacturing method, the lights of different wavelengths input into the first end of the any one of the optical fibers are read at the second ends of the optical fibers. When the branching ratio difference between the lights of respective wavelengths becomes substantially equal to the branching ratio difference that is found in accordance with the relational expression representing the relationship in the previously manufactured optical fiber coupler between the branching ratio of the light of either one of the wavelengths and the branching ratio difference from the light of the other wavelength, the fusing processes is stopped. Accordingly, since the stop point of the fusing process is controlled in accordance with the relational expression of the branching ratio and the branching ratio difference during manufacture in the previously manufactured fiber coupler, the fusing process is automatically controlled and the manufacture of the optical fiber coupler can be automated, therefore the optical fiber coupler with a stable optical characteristic by virtue of the automation is efficiently and easily obtained. With the relational expression based on the relationship in the previously manufactured fiber coupler between the branching ratio and the branching ratio difference during manufacture, the optical fiber coupler with high accuracy and the desired branching ratio can be obtained.

In the optical fiber manufacturing method according to an aspect of the present invention, the relational expression is preferably an approximate function representing the value of the branching ratio difference of the lights output from the second ends of the plural optical fibers when the fusing process of an optical fiber coupler is stopped, with which branching ratios of lights of different wavelengths become substantially equal in final form.

In this manufacturing method, the relational expression is the approximate function that is found based on the value of the branching ratio difference when the fusing process of the optical fiber coupler is stopped, with which branching ratios of the lights of different wavelengths become substantially equal in final form. Accordingly, since the fusion stop timing is controlled in accordance with the relational expression based on measured value, especially the optical fiber coupler, for example, that branches input lights of large wavelength at the substantially same ratio can be easily obtained with the desired branching ratio and high accuracy.

In the optical fiber manufacturing method according to another aspect of the present invention, the relational expression is preferably an approximate function representing the value of the branching ratio difference of the lights output from the second ends of the plural optical fibers when the fusing process of the optical fiber coupler is stopped, with which branching ratio the a light of either one wavelength becomes equal to a predetermined value in final form.

In this manufacturing method, the relational expression is the approximate function that is found based on the value of the branching ratio difference when the fusing process of the optical fiber coupler is stopped, with which branching ratios of the lights of either one wavelength become equal to the predetermined value in final form. Accordingly, since the fusion stop timing is controlled in accordance with the relational expression based on measured value, especially the optical fiber coupler, for example, that branches the input light of at least one wavelength at the predetermined branching ratio and appropriately branches the other wavelength can be easily obtained with the desired branching ratio and high accuracy.

In the optical fiber coupler manufacturing method according to a further aspect of the present invention, the relational expression is preferably linear functions that are different from each other and respectively given for predetermined ranges of branching ratio.

In this manufacturing method, the relational expression is the linear functions that are different from each other and respectively given for the predetermined ranges of branching ratio. Accordingly, the relational expression based on measured values is easily derived and the computation is easy because of simple linear functions as the relational expression. Therefore, the optical fiber coupler with high accuracy and the desired branching ratio can e easily manufactured.

In the optical fiber coupler manufacturing method according to still a further aspect of the present invention, the relational expression is preferably an approximate curve based on linear functions that are different from each other and respectively given for predetermined ranges of branching ratio.

In this manufacturing method, the relational expression is the approximate curve based on the linear functions that are different from each other and respectively given for the predetermined ranges of branching ratio. Accordingly, comparing with the case that computes with the different linear functions given for predetermined ranges of branching ratio, the optical fiber coupler with higher accuracy and the desired branching ratio can e easily manufactured under the control of the one relational expression based on measured values.

The optical fiber manufacturing method according to yet another aspect of the present invention, the relational expression is preferably a cubic function.

In this manufacturing method, the relational expression is the cubic function. Accordingly, the desired branching ratio with higher accuracy can be obtained as well as the optical fiber coupler with high accuracy and the desired branching ratio can be easily obtained.

In the optical fiber coupler manufacturing method according to still anther aspect of the present invention, it is preferable that the relational expression represents a condition for manufacturing the optical fiber coupler that branches the input lights of different wavelengths at a substantially same ratio and expressed as -0.00001x³ + 0.001557x² + 0.08135x, and a value of branching ratio difference for stopping the fusing process is computed by assigning a value of branching ratio of the light of the wavelength read during the fusing process as "x".

In this manufacturing method, the relational expression expressed as -0.00001x³ + 0.001557x² + 0.08135x is used for manufacturing the optical fiber coupler that branches the input lights of different wavelengths at the substantially same ratio, and the value of branching ratio difference for stopping the fusing process is computed by assigning the value of branching ratio of the light of the wavelength read during the fusing process as "x" Accordingly, the optical fiber coupler that braches at any substantially same ratio can be obtained with high accuracy and the desired branching ratio.

In the optical fiber coupler manufacturing method according to yet a further aspect of the present invention, it is preferable that the relational expression represents a condition for manufacturing the optical fiber coupler that branches an input light of at least one wavelength at a predetermined branching ratio and appropriately branches the other wavelength, the relational expression being expressed as -0.000025x³ + 0.0025x² + 0.16x, and value of branching ratio difference for stopping the fusing process is computed by assigning the value of branching ratio of the light of wavelength read during the fusing process as "x".

In this manufacturing method, the relational expression expressed as -0.000025x³ + 0.0025x² + 0.16x is used for manufacturing the optical fiber coupler that branches the input light of at least one wavelength at the predetermined branching ratio and appropriately branches the other wavelength, and the value of branching ratio difference for stopping the fusing process is computed by assigning the value of branching ratio of the light of wavelength read during the fusing process as "x". Accordingly, the optical fiber coupler that branches the input light of at least one wavelength at any predetermined branching ratio can be obtained with high accuracy and the desired branching ratio.

An optical fiber coupler manufacturing apparatus according to the present invention includes: a holding section for aligning and holding plural optical fibers substantially in parallel; a heater for heating at least a part of the plural optical fibers held by the holding section; a drawing section for drawing the optical fibers heated by the heater; and a controller for controlling the heater and the drawing section, the controller having: a light inputting section for inputting lights of different wavelengths into a first end of at least any one of the optical fibers; a sensor for detecting lights output from second ends opposite to the first end of the plural optical fibers; a storage for storing information regarding a relational expression representing a relationship in a previously manufactured optical fiber coupler between an branching ratio of either one of the wavelengths and a branching ratio difference from the different wavelength; a computing section for computing a branching ratio difference of the lights detected by the sensor and outputting a predetermined control signal when recognizing that a value of the computed branching ratio difference becomes substantially equal to a value of branching ratio difference which is found based on the relational expression stored in the storage; and an operation controller for stopping the heating by the heater and the drawing by the drawing section.

This manufacturing apparatus implements the process that the light inputting section inputs the lights of different wavelengths into the first end of at least any one of the plural optical fibers aligned and held by the holding section substantially in parallel, the sensor detects the lights output from the second ends opposite to the first end of the plural optical fibers, the computing section computes the branching ratio difference of the lights detected by the sensor and outputs the predetermined control signal when recognizing that the value of the computed branching ratio difference becomes substantially equal to the value of branching ratio difference which is found based on the relational expression stored in the storage, and the operation controller stops the heating by the heater and the drawing by the drawing section. Accordingly, since the stop point of the fusing process is controlled in accordance with the relational expression of the branching ratio and the branching ratio difference during manufacture in the previously manufactured fiber coupler, the fusing process is automatically controlled and the manufacture of the optical fiber coupler can be automated improving manufacturability thereof, therefore the optical fiber coupler with a stable optical characteristic by virtue of the automation is efficiently and easily obtained. With the relational expression based on the relationship in the previously manufactured fiber coupler between the branching ratio and the branching ratio difference during manufacture, the optical fiber coupler with high accuracy and the desired branching ratio can be obtained.

An optical fiber coupler manufacturing apparatus according to the present invention implements the above-described optical fiber manufacturing methods.

The manufacturing apparatus implements the above-described optical fiber manufacturing methods that easily realize an optical fiber coupler with high accuracy and a desired branching ratio. Accordingly, the optical fiber coupler with high accuracy and the desired branching ratio can e easily manufactured.

An optical fiber coupler according to the present invention is manufactured by implementing the above-described optical fiber coupler manufacturing methods.

The optical fiber coupler is manufactured by implementing the above-described optical fiber manufacturing methods that easily realizes an optical fiber coupler with high accuracy and a desired branching ratio. Accordingly, the desired branching ratio with high accuracy can be easily obtained.

### BRIEF DESCRIPTION OF THE DRAWINGS

Fig. 1 is a fragmentary sectional view showing a part around a protection member of an optical fiber coupler according to an embodiment of the present invention;
Fig. 2 is a fragmentary sectional view showing another part around the protection member of the optical fiber coupler according to the embodiment;
Figs. 3A and 3B are illustrations showing optical fiber couplers of different types, specifically Fig. 3A showing a branching state of DWC and Fig. 3B showing a branching state of WFC;
Fig. 4 is a schematic block diagram showing a manufacturing apparatus for the optical fiber coupler according to the embodiment;
Fig. 5 is a graph showing a relative expression to set a fusion stop point of the optical fiber coupler according to the embodiment;
Figs. 6A to 6D are illustrations each showing a heating and drawing state during manufacture of the optical fiber coupler according to the embodiment, specifically Fig. 6A showing a state in which either one optical fiber is heated and drawn for reducing the diameter thereof, 6B showing a state in which a pair of optical fibers is heated and fused, Fig. 6C showing a state in which the pair of optical fibers is heated and drawn, and Fig. 6D showing a manufactured optical fiber coupler;
Fig. 7 illustrates a screen on a display showing a graph of a light branching state during fusion in manufacture of DWC with a branching ratio of 70%:30% according to the embodiment;
Fig. 8 illustrates a screen on the display showing a graph of a light branching state during fusion in manufacture of DWC with a branching ratio of 50%:50% according to the embodiment;
Fig. 9 illustrates a graph of computed data of a stop timing based on the light branching ratio during fusion in manufacture of DWC with the branching ratio of 70%:30% according to the embodiment;
Fig. 10 illustrates a graph of computed data of a stop timing based on the light branching ratio during fusion in manufacture of DWC with the branching ratio of 50%:50% according to the embodiment;
Fig. 11 is a graph showing an example of a relative expression to set a stop point of fusion of the optical fiber coupler according to the embodiment;
Fig. 12 is a graph showing another example of a relative expression to set a stop point of fusion of the optical fiber coupler according to the embodiment;
Fig. 13 is a graph showing a still another example of a relative expression to set a stop point of fusion of the optical fiber coupler according to the embodiment; and
Fig. 14 is a graph of a cubic function that approximates linear functions of the relations shown in Figs. 11 to 13.

### DETAILED DESCRIPTION OF PREFERRED EMBODIMENT(S)

An embodiment of the present invention will be described below with reference to attached drawings.

### [Constitution of Optical Fiber Coupler]

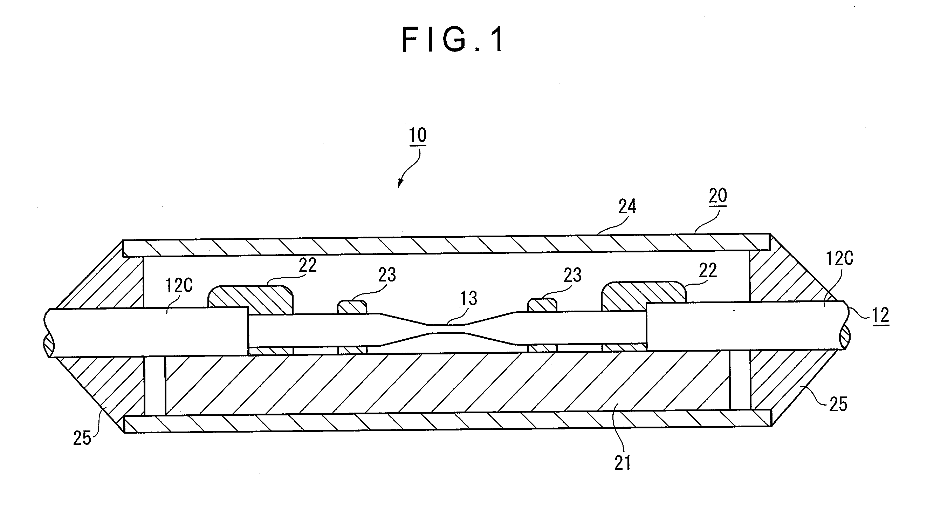

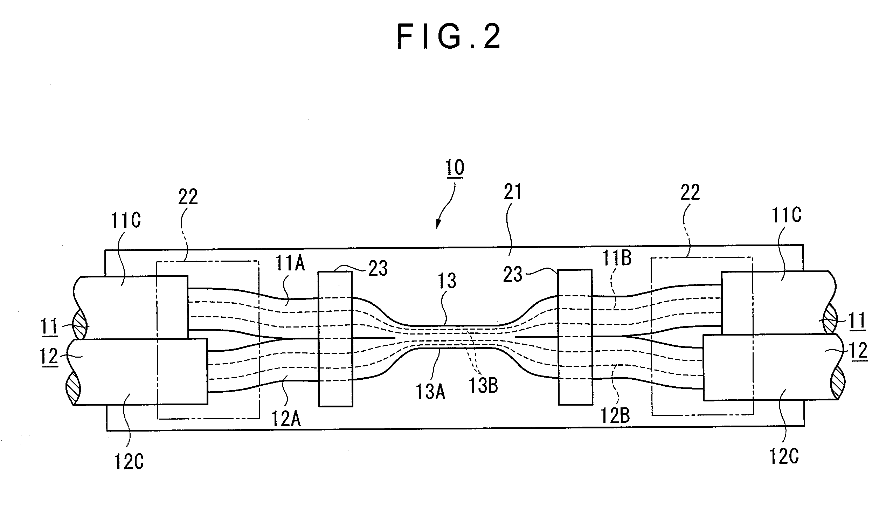

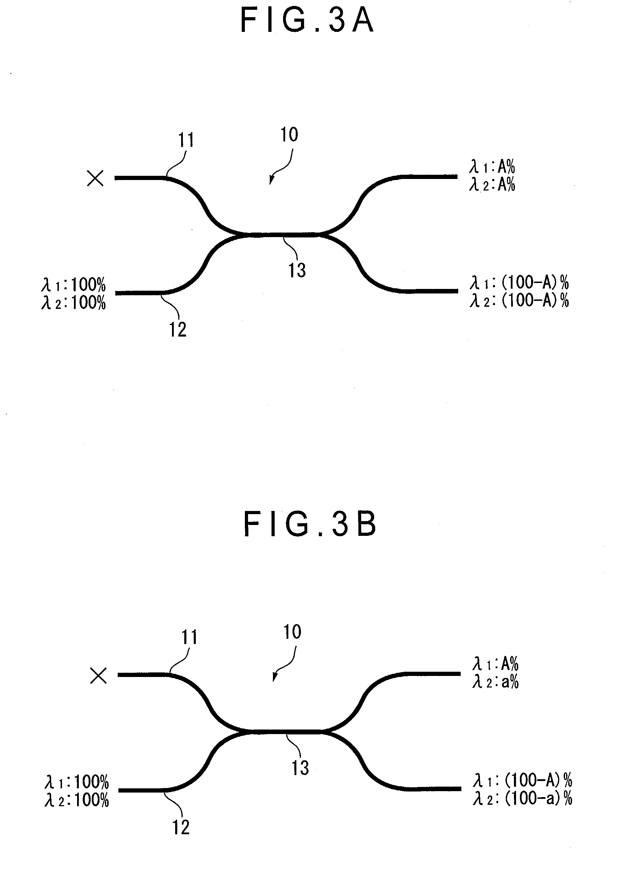

Fig. 1 is a fragmentary sectional view showing a part around a protection member of an optical fiber coupler manufactured in this embodiment. Fig. 2 is a fragmentary sectional view showing another part around the protection member of the optical fiber coupler. Figs 3A and 3B are illustrations that show optical fiber couplers of different types, Fig. 3A showing a branching state of DWC and Fig. 3B showing a branching state of WFC. Note that although a fused optical fiber coupler in which two optical fibers are fused is described in this embodiment, a number of optical fiber to be fused is not limited to two. A coupler in which a plurality of optical fibers are used may also be applied.

In Figs 1 and 2, a reference numeral 10 denotes the optical fiber coupler. The optical fiber coupler 10, in which optical fibers 11 and 12 are at least partly fused by a melting and drawing process to make a branching form, inputs lights from a longitudinal end of one ore more optical fiber couplers 11 and 12, multiplexes or demultiplexes the lights at a predetermined branching ratio or a demultiplexing ratio, and outputs the lights from opposite ends.

The optical fiber coupler 10 is classified into two types; one is Wavelength Independent Coupler (hereinafter referred to as DWC) and the other is Wavelength Flattened Coupler (hereinafter referred to as WFC).

In DWC, input lights of different wavelengths are branched at the substantially same ratio. More specifically, in DWC, as shown in Fig. 3A, when lights of different wavelengths λ1 and λ2 are input into an end of either one optical fiber 12 (11), the lights of wavelengths λ1 and λ2 are respectively branched at the substantially same branching ratio and output from opposite ends of the optical fibers 11 and 12. In this DWC, the branching ratio (A/100) of the lights of wavelengths λ1 (λ2) that are respectively output from the opposite ends of the optical fibers 11 and 12 is appropriately set in view of the diameter of the optical fibers 11 and 12 and fusion state.

In WFC, at least one input light of a certain wavelength is branched at a predetermined ratio, and an input light of the other wavelength is appropriately branched. More specifically, in WFC, as shown in Fig. B3, lights of different wavelengths λ1 and λ2 are input into an end of either one optical fiber 12 (11), a light of either one wavelength λ1 (λ2) is branched at a predetermined branching ratio (A/100), and a light of a similar wavelength other light of other wavelength is also branched at a ratio that is substantially equal to the predetermined ratio. The other wavelength λ2 (λ1) is appropriately branched at branching ratio (a/100), that does not have to be the same as the branching ratio (A/100) of the wavelength λ1 (λ2).

The optical fibers 11 and 12 to be fused, which are used in the optical fiber coupler 10, respectively have linear clads 11A and 12A, cores 11B and 12B as central axes thereof, and sheaths 11 C and 12C surrounding an outer circumference thereof.

In the optical fiber coupler 10, a fused region 13 is formed by fusing parts where the sheaths 11C and 12C of the optical fibers 11 and 12 are removed. At the fused region 13, two cores 13B are surrounded substantially in parallel by a clad 13A having substantially circular cross section and columnar outer surface.

The optical fiber coupler 10 includes a protection member 20 for protecting a vicinity of the fused region 13. The protection member 20 includes a support plate 21, fiber fixtures 22, coupler fixtures 23, and a protection tube 24.

The support plate 21 is made of, for instance, a quartz plate and formed in plate shape. On one surface of the support plate 21, the pair of fiber fixtures 22 are provided to mutually oppose with a predetermined distance therebetween.

The fiber fixtures 22 are located on the surface of the support plate 21 for positioning and fixing the optical fibers 11 and 12 onto the support plate 21. The coupler fixtures 23 are located between the fiber fixtures 22 to be at both end sides of the fused region 13 for positioning and fixing the optical fibers 11 and 12 onto the support plate 21. The fiber fixtures 22 and the coupler fixtures 23 are made of, for instance, ultraviolet-curing resin.

The protection tube 24 is, for instance, a metal tube and capable of accommodating the support plate 21 on which the optical fiber coupler 10 is fixed. Note that the protection tube 24 is not limited to a metal tube, and may be made of any material with a small linear expansion coefficient, such as a glass tube. The protection tube 24 accommodating the support plate 21 is closed at both ends with sealing members 25 from which the optical fibers 11 and 12 extend outward. The optical fiber coupler 10 is fixed in a manner that the vicinity of the fused region 13 is sealed inside the protection member 20.

### [Constitution of Manufacturing Apparatus]

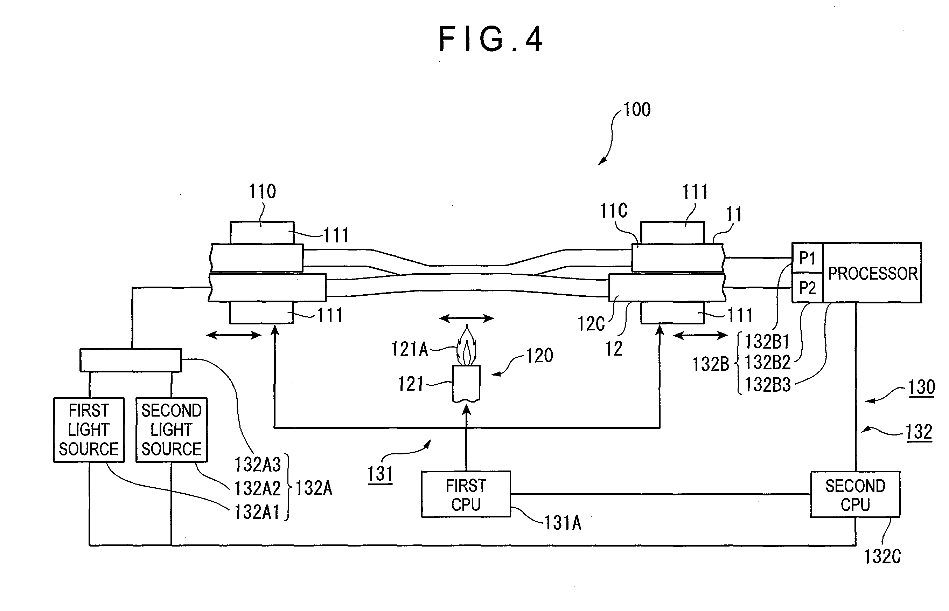

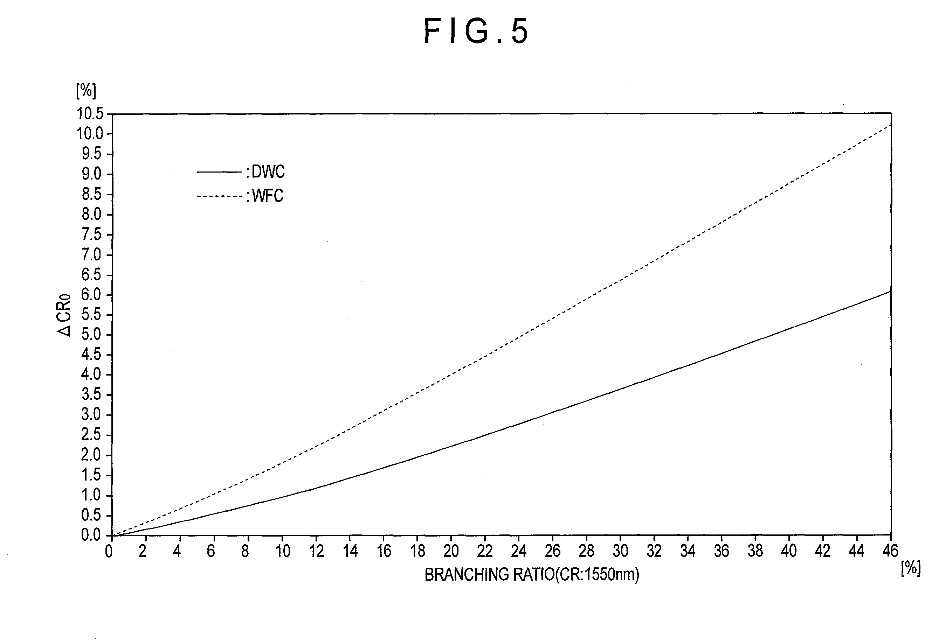

A constitution of a manufacturing apparatus for manufacturing the above optical fiber coupler will be described below with reference to the drawings. Fig. 4 is a schematic block diagram showing the manufacturing apparatus. Note that although the manufacturing apparatus uses a micro torch which shoots flame as a heater in this embodiment, a heater which does not shoot flame may also be used. Fig. 5 is a graph showing a relative expression to set a fusion stop point of the optical fiber coupler.

In Fig. 4, a reference numeral 100 denotes the manufacturing apparatus. The manufacturing apparatus 100 fuses at least a part of two optical fibers 11 and 12 to manufacture the optical fiber coupler 10. The manufacturing apparatus 100 includes a holding section 110, a heater 120, drawing sections (not shown), and a controller 130. The controller 130 controls the fusion state, and includes a fusion controller 131 and a measuring unit 132 as a computing section.

The holding section 110 has a pair of holders 111, which may be clamps, and holds the parts without the sheaths 11C and 12C of the optical fibers 11 and 12 in a manner that the parts are aligned substantially in parallel to be substantially taut and to be in contact with each other. More specifically, the parts without the sheaths 11C and 12C of the optical fibers 11 and 12 are held in a manner that the parts are longitudinally in parallel or twisted together to be in contact with each other. The pair of the holder 111 are respectively disposed on the drawing sections so that the drawing sections can change the distance between the holders 111.

The operation of the drawing sections is controlled by the fusion controller 131 of the controller 130 in terms of amount and time to change the distance between the holders 111 and speed to move holders 111.

The heater 120 includes a base (not shown), a micro torch (micro burner) 121, and a temperature sensor (not shown). The base is movably disposed with the control of the fusion controller 131 of the controller 130. The micro torch 121 is integrally formed with the base, and adapted to shoot flame 121 A for heating the optical fibers 11 and 12. The temperature sensor detects the temperature of the optical fiber 11 and 12 heated by the micro torch 121. The temperature may be detected with any methods. For instance, the temperature may be determined in accordance with the luminous energy of the optical fibers 11 and 12 that emit the lights when heated.

The heater 120 controls the micro torch 121, or heating temperature and heating time in accordance with the temperature detected by the temperature sensor at the fusion controller 131 of the controller 130.

The fusion controller 131 of the controller 130 has a first CPU (Central Processing Unit) 131A as an operation controller. The first CPU 131A is connected to the heater 120 and the drawing sections to control the operation of the heating section 120 and the drawing sections according to conditions preset in an embedded memory (not shown). More specifically, the first CPU 131A controls the heating temperature and heating time while the heater 120 heats the optical fibers 11 and 12 and also controls drawing time and drawing speed while the drawing sections draw the optical fibers 11 and 12 sandwiched between the holders 111.

The measuring unit 132 of the controller 130 includes a light emitter 132A as a light inputting section, a light receiver 132B as a sensor, a storage, e.g., a memory (not shown), and a second CPU 132C as a computing section. The light emitter 132A includes a first light source 132A1, a second light source 132A2, and a multiplexer 132A3. The first light source 132A1 and the second light source 132A2, which may be laser light sources, respectively output lights of different wavelengths. For example, the first light source 132A1 outputs a light of approximately 1550 nm wavelength and the second light source 132A2 outputs a light of approximately 1310 nm wavelength. The multiplexer 132A3 multiplexes the lights output from the first light source 132A1 and the second light source 132A2. The multiplexer 132A3 is detachably connected to either one of the optical fibers 11 and 12 of the optical fiber coupler 10 for inputting the multiplexed light into a longitudinal end of the optical fiber 11 or 12.

The light receiver 132B includes a first light receiver (P1) 132B1, a second light receiver (P2) 132B2, and a processor 132B3. The first light receiver 132B1 and the second light receiver 132B2, which may be phototransistors, are respectively connected to the ends of the optical fibers 11 and 12 of the optical fiber coupler 10 for receiving the lights output from the optical fibers 11 and 12. The processor 132B3 are connected to the first light receiver 132B1 and the second light receiver 132B2 for processing an electrical signal related with the lights received by the first light receiver 132B1 and the second light receiver 132B2 to output the electrical signal.

The second CPU 132C are connected to the processor 132B3 of the light receiver 132B. The second CPU 132C appropriately processes the signal, which has been processed by the processor 132B3, according to a processing program stored in the memory or according to a computing condition such as a predetermined relational expression, then recognizes and outputs light branching and demultiplexing states of the pair of fused optical fibers 11 and 12. For instance, a graph is displayed on a display unit (not shown). The second CPU 132C is connected to the first CPU 131A of the fusion controller 131. The second CPU 132C recognizes, in accordance with the signal from the processor 132B3, preset branching and demultiplexing states to output a control signal for stopping the fusion process to the first CPU 131A, so that the fusion process is stopped.

The relational expression set in the memory is, for example, a function shown in the graph in Fig. 5. More specifically, a cubic function; y = -0.00001x³ + 0.001557x² + 0.08135x is used for the manufacture of the optical fiber coupler 10 of DWC while a cubic function; y = -0.000025x³ + 0.0025x² + 0.16x is used for the manufacture of the optical fiber coupler 10 of WFC. The graph in Fig. 5 shows the cubic functions, i.e., relational expressions for the manufacture of the optical fiber coupler 10 of DWC and WFC, the graph representing the relation between a value of branching ratio CR and branching ratio difference ΔCR₀, where the CR is the branching ratio of the light of 1550 nm wavelength during fusion and the ΔCR₀ is the branching ratio difference between the light of 1550 nm wavelength and the light of different wavelength at the fusion stop point. When the branching ratio CR of the light of 1550 nm wavelength detected during fusion is substituted for a value of "x" in the above cubic function, the branching ratio difference ΔCR₀at the fusion stop timing can be found as a value of "y". In accordance with such computation, the second CPU 132C recognizes the branching ratio of the lights of respective wavelengths based on the signal output from the processor 132B3, computes a branching ratio difference ΔCR between the lights of respective wavelengths. When recognizing that the computed branching ratio ΔCR becomes substantially equal to the branching ratio difference ΔCR₀ found in accordance with the cubic function, the second CPU 132C outputs a control signal to stop the fusion.

### [Operation of Manufacturing Apparatus]

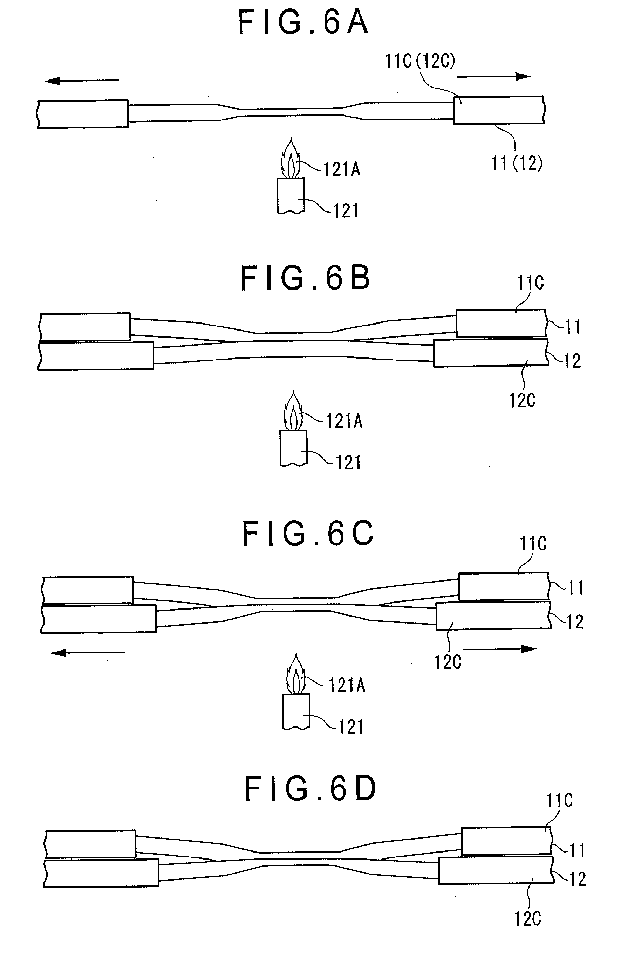

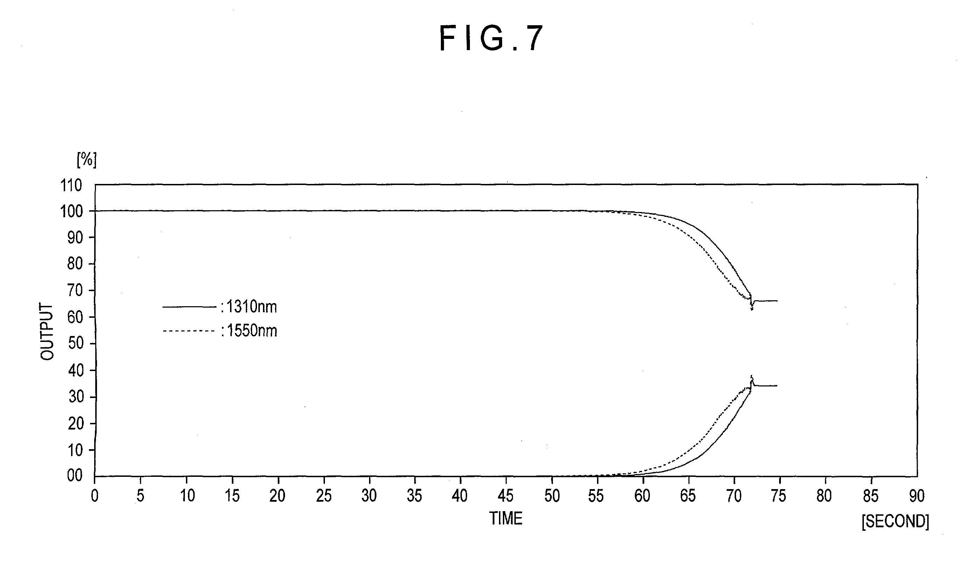

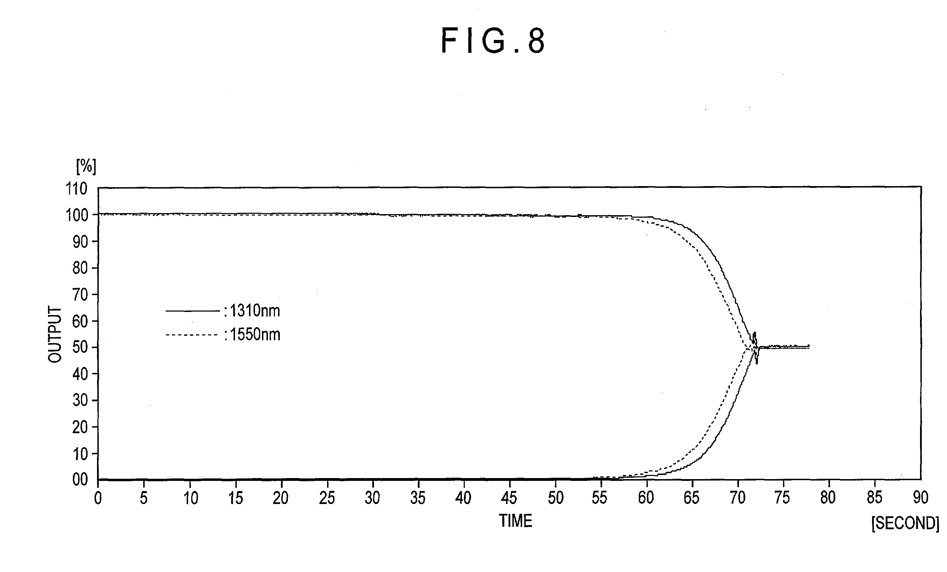

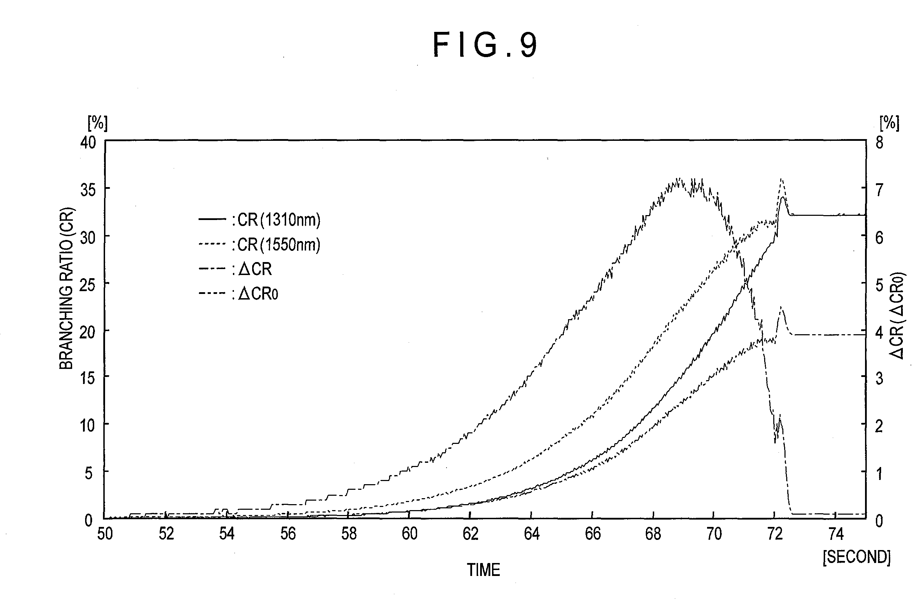

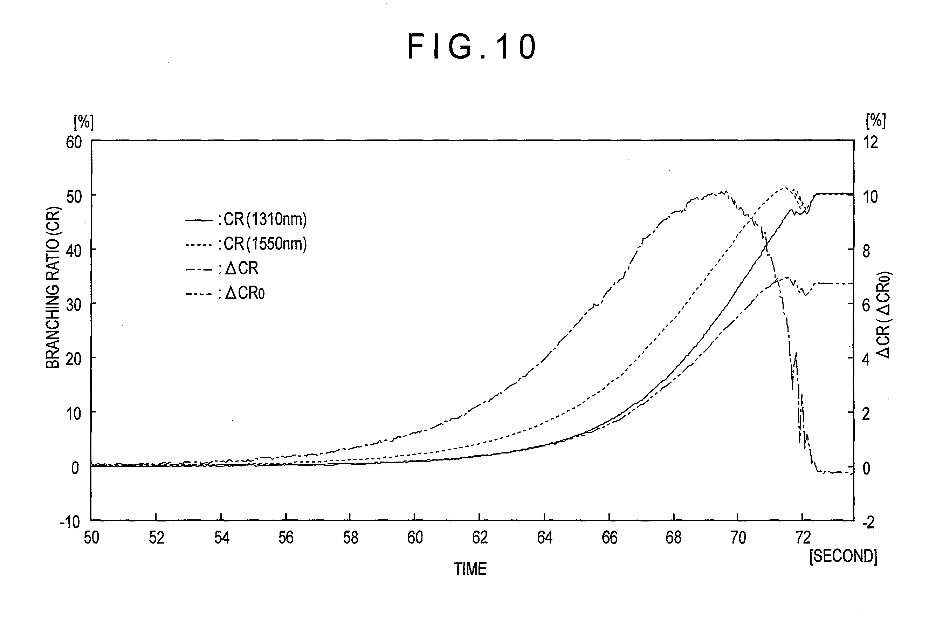

The operation for manufacturing the optical fiber coupler with the use of the above manufacturing apparatus will be described below with reference to the drawings. Figs. 6A to 6D are illustrations each showing a heating and drawing state during manufacture of the optical fiber coupler. More specifically, Fig. 6A is an illustration showing a state in which either one optical fiber is heated and drawn so that a diameter of a part to be fused is reduced to have a predetermined light propagation constant, Fig. 6B is an illustration showing a state in which a pair of optical fibers is heated and fused, Fig. 6C is an illustration showing a state in which the pair of optical fibers is heated and drawn, and Fig. 6D is an illustration showing an optical fiber coupler that is adjusted to have a predetermined branching ratio. Fig. 7 illustrates a screen on a display showing a graph of a light branching state during fusion in manufacture of DWC with a branching ratio of 70%:30%. Fig. 8 illustrates a screen on a display showing a graph of a light branching state during fusion in manufacture of DWC with a branching ratio of 50%:50%. Fig. 9 illustrates a graph of computed data of a stop timing based on the light branching ratio during fusion in manufacture of DWC with a branching ratio of 70%:30%. Fig. 10 illustrates a graph of computed data of stop timing based on light branching ratio during fusion in manufacture of DWC with a branching ratio of 50%:50%.

Firstly, pre-processing is performed. More specifically, a part of sheaths 11 C and 12C of the two optical fibers 11 and 12 are removed. Then, as shown in Fig. 6A, the holding section 110 holds the optical fiber 11 (12) in a manner that the part without the sheath 11C (12C) is positioned between the pair of holders 111 to be substantially taut. By controlling the heater 120 according to a temperature condition and a drawing condition that are preset and stored in the memory, the diameter of the part without the sheaths 11C (12C) of the optical fiber 11 (12) is reduced, so that the optical fiber 11(12) with the predetermined propagation constant is produced.

Then, fusion process is performed. More specifically, the reduced diameter part of the optical fiber 11 (12), which is adjusted to have the predetermined propagation constant, is twisted together with the part without the sheath 12C (11 C) of the optical fiber 12 (11) to be in contact as shown in Fig. 6B. Then, the holding section 110 holds the optical fibers 11 and 12 in a manner that the reduced diameter part is positioned between the pair of holders 111 to be substantially taut. Other than the twisted manner, the optical fibers 11 and 12 may be held in a manner that they are aligned substantially in parallel to be in contact, or in a manner that they are crossed to be in contact.

However, the twisted manner is preferable because a desirable fused region 13 can be formed when the optical fibers 11 and 12 longitudinally crossing are heated and drawn to be fused.

After that, the light emitter 132A of the measuring unit 132 is activated. The first light source 132A1 and the second light source 132A2 respectively output lights of different wavelengths λ1 and λ2, e.g., lights of 1550 nm and 1310 nm wavelengths. The multiplexer 132A3 multiplexes the lights to input into an end of either one of the optical fibers 11 and 12 that are held by the holding section 110. The thus input lights are received by the first light receiver 132B1 and the second light receiver 132B2 of the light receiver 132B, and a signal that is output in response to the light reception is processed by the processor 132B3. Then, the second CPU 132C commands the display unit to display the light branching and the demultiplexing states with a screen like the one shown in Fig. 7. Here, since the lights are input into either one of the optical fibers 11 and 12, the lights are received either one of the first light receiver 132B1 and the second light receiver 132B2.

Then, according to the predetermined condition stored in the memory, the second CPU 132C of the measuring unit 132 outputs a signal for starting fusion process to the first CPU 131A of the fusion controller 131. When receiving the signal, the first CPU 131 A operates the heater 120 so that the flame 121 A of the micro torch 121 heats the twisted and mutually contacted parts without the sheaths 11C and 12C of the optical fibers 11 and 12 which are held by the holding section 110. The first CPU 131A also operates the drawing sections (not shown) to draw the optical fibers 11 and 12 being heated.

During this fusion process, the first CPU 131 A controls the base to move a predetermined distance at a predetermined speed substantially along the longitudinal direction of the optical fibers 11 and 12. The first CPU 131A also controls the heating process within a predetermined temperature range and predetermined time according to a signal from the temperature sensor. The temperature may be controlled with any method. For instance, heat quantity may be adjusted by adjustment of fuel gas or air amount to be provided to the micro torch 121, or the distance from the flame, i.e., the distance between the flame 121A and the optical fibers 11 and 12 may be adjusted by moving the base. The first CPU 131 A controls the pair of the holders 111 of the holding section 110 to move away from each other at a predetermined speed for drawing.

Through this fusion process, the two optical fibers 11 and 12 are fused with each other so that its cross section has a shape of partly connected two different-sized circles, a shape of ellipse, or a circular shape. During the fusion, the second CPU 132C recognizes, in accordance with the signal processed by the processor 132B3, a branching state of the lights that are output from the optical fibers 11 and 12 and received by the first light receiver 132B and the second light receiver 132B2 of the light receiver 132B.

The branching state is displayed in the graph on a screen of the display as shown in Figs. 7 and 8 for instance. As shown in Figs. 7 and 8, as the fusion progresses, the lights are gradually branched. Fig. 7 shows the branching state during manufacture of the optical fiber coupler 10 of DWC in which the input lights of different wavelengths are respectively branched at the same ratio of 70%:30%. Fig. 8 shows the branching state during manufacture of the optical fiber coupler 10 of DWC in which the input lights of different wavelengths are respectively branched at the same ratio of 50%:50%.

Then, in accordance with the signal of the branching state from the processor 132B3, as shown in the graphs in Figs. 9 and 10, the second CPU132C successively computes the branching ratio difference ΔCR (chain line in Figs. 9 and 10) between the branching ratios CR of the lights of different wavelengths output from the optical fibers 11 and 12. Further, in accordance with the signal of the branching state from the processor 132B3, the second CPU 132C computes the value of the branching ratio difference ΔCR₀ (chain double-dashed line in Figs. 9 and 10) using the relational expression shown in Fig. 5 that is prestored in the memory. Fig. 9 shows the branching state during manufacture of the optical fiber coupler 10 of DWC in which the input lights of different wavelengths are respectively branched at the same ratio of 70%:30%. Fig. 10 shows the branching state during manufacture of the optical fiber coupler of DWC 10 in which the input lights of different wavelengths are respectively branched at the same ratio of 50%:50%.

More specifically, the branching ratio of the light of 1550 nm wavelength given by the processor 132B3 is substituted into the relational expression shown in Fig. 5 to successively compute the value of the branching ratio difference ΔCR₀. Then, the second CPU 132C determines whether the computed branching ratio difference ΔCR is substantially equal to the branching ratio difference ΔCR₀ that is found in accordance with the relational expression. When determining that the ratios are substantially equal, or as shown in Figs. 9 and 10, when the branching ratio difference ΔCR between the detected lights and the branching ratio difference ΔCR₀ represented by the relational expression are crossed, the CPU 132C outputs the control signal for stopping the fusion process to the first CPU 131A. When recognizing the control signal, the first CPU 131A controls the heater 120 to stop heating and the drawing section to stop drawing, so that the fusion process is stopped.

### [Fusion Condition Setting in Manufacturing Apparatus]

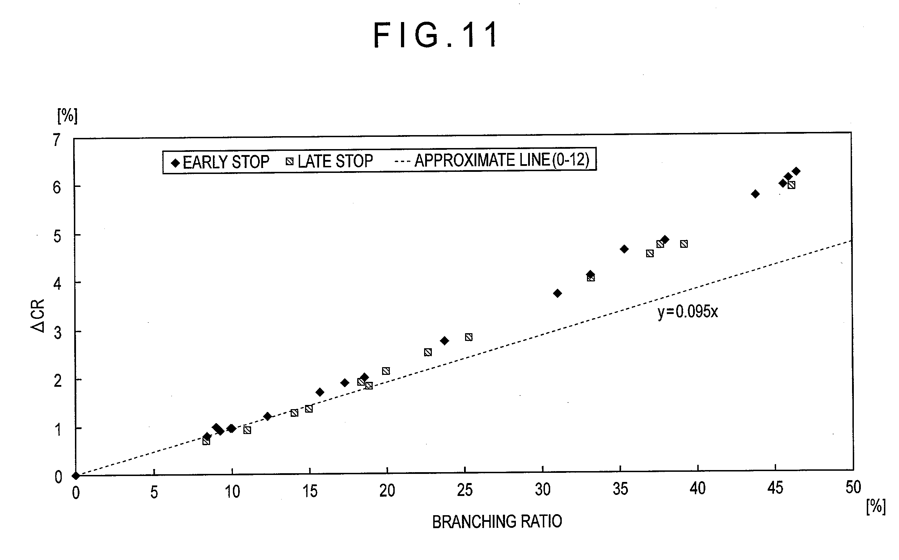

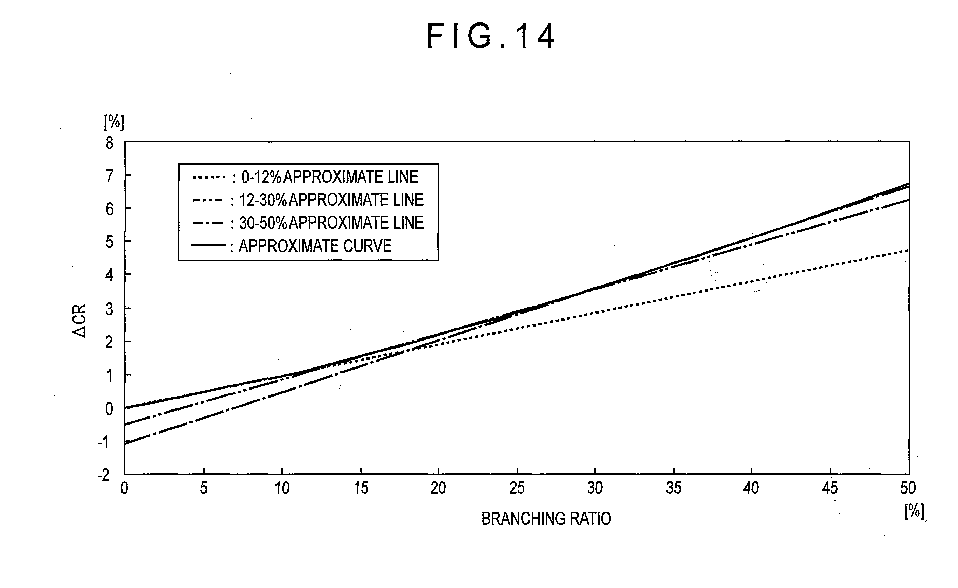

Fusion conditions for manufacturing the above optical fiber coupler, i.e., setting of the fusion stop timing will be described below with reference to the drawings. Figs. 11 to 13 are graphs each showing a relation between a branching ratio of 1550 nm wavelength and a branching ratio difference ΔCR in manufacture of the optical fiber coupler 10 of DWC that branches the input lights of different wavelengths respectively at the same ratio of 70:30. Fig. 14 is a graph of a cubic function that approximates the linear functions representing relations shown in Figs. 11 to 13.

When manufacturing the optical fiber coupler 10 of DWC, as explained earlier referring to Fig 3A, since the lights of different wavelengths λ1 and λ2 are respectively branched at the same branching ratio, the value of the branching ratio difference ΔCR between the branching ratios CR of the output lights is approximately zero. Even after the fusion is stopped, the branching ratio CR might fluctuate because of further incorporation of the optical fibers 11 and 12 due to residual heat and volume contraction due to cooling. Therefore, it is necessary to stop fusion before the branching ratio difference ΔCR of the lights detected during fusion becomes zero allowing in the subsequent fluctuation of the branching ratio CR so that the lights have the same branching ratio. Further, the fusion stop timing might be different because the respective branching ratios of optical fibers 11 and 12 for branching the different wavelengths at the same branching ratio are different.

The fusion of the optical fiber coupler 10 of DWC with the desired branching ratio, with the use of the optical fibers 11 and 12 of different diameters is stopped before the branching ratio difference ΔCR becomes zero, and the actual branching ratio of the manufactured optical fiber coupler is measured. Consequently, it is found that the target branching ratio and the branching ratio difference ΔCR when fusion is stopped have a relationships shown in Figs. 11 to 13.

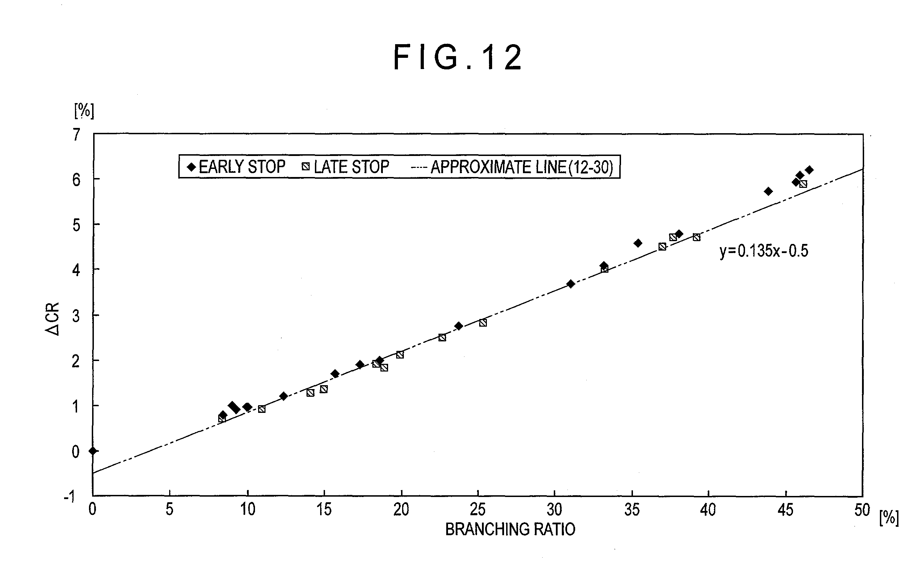

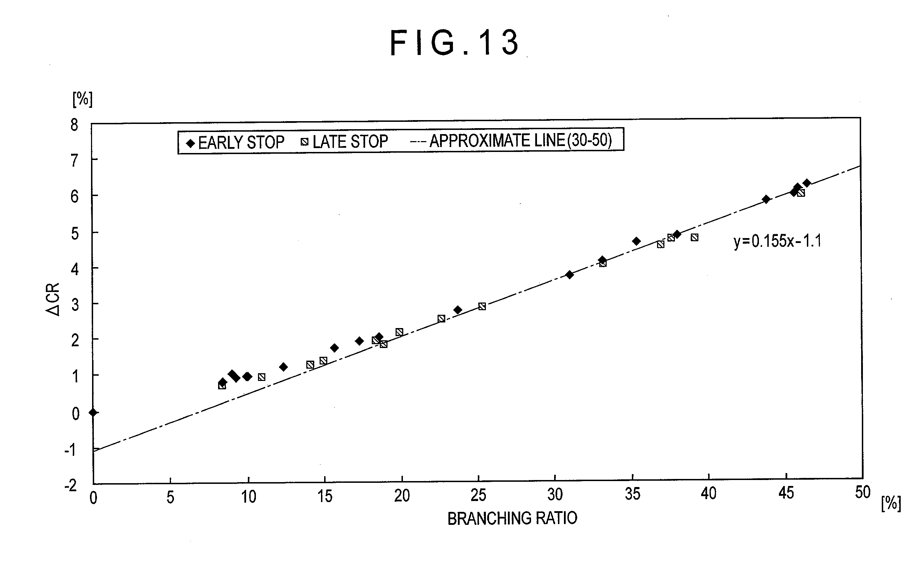

More specifically, when the branching ratio is within the range 0 to 12%, a linear function y = 0.095x shown in Fig. 11 is valid as an approximate function. When the branching ratio is within the range of 12 to 30%, a linear function y = 0.135x - 0.5 shown in Fig. 12 is valid as an approximate function. When the branching ratio is within the range of 30 to 50%, a linear function y = 0.155x - 1.1 shown in Fig. 13 is valid as an approximate function. By computing the linear functions to derive an approximate function, the cubic function shown in Figs. 5 and 14 is derived.

Accordingly, a predetermined value before the branching ratio difference ΔCR of the detected light becomes zero is easily found in accordance with the cubic function that is found based on measured values.

### [Advantages of Embodiment]

As described above, in the above embodiment, when fusing the two optical fibers 11 and 12 with the sheaths 11C and 12C being removed are aligned substantially in parallel to be in contact with each other, the lights of the different wavelengths λ1 and λ2 input into an end of the either one optical fiber 11(12) are read at the opposite ends of the optical fibers 11 and 12. When the branching ratio difference ΔCR becomes substantially equal to the value of the branching ratio difference ΔCR₀ represented by a predetermined relational expression that is a basis of the stop timing, the heating and drawing processes are stopped. Accordingly, since a stop point of the heating and drawing processes is controlled in accordance with the preset predetermined relational expression, the fusion process can be automatically controlled and manufacture of the optical fiber coupler 10 can be automated, and therefore the optical fiber coupler 10 with a stable optical characteristic by virtue of the automation is efficiently and easily obtained. The predetermined relational expression, for example, is preset in accordance with the measured values based on, for example, the relationship between the branching ratio at the stop point of heating and drawing processes and that of the manufactured optical fiber coupler 10. Therefore, without fixing the branching ratio to a predetermined value as conventionally doing, even when the branching ratios are different and fusion stop timings are different, the optical fiber coupler 10 with high accuracy and a desired branching ratio, for example DWC that highly accurately branches different wavelengths respectively at the same ratio and WFC of which branching ratio becomes a highly accurately predetermined value, can be easily obtained.

The relational expression is the approximate function derived based on the value of the branching ratio difference ΔCR when the heating and drawing processes of the optical fiber coupler 10 are stopped, with which branching ratios of the lights of different wavelengths become substantially equal in final form. Therefore, since the fusion stop timing is controlled in accordance with the relational expression based on the measured value, the optical fiber coupler 10 with the desired branching ratio can be highly accurately and easily obtained.

Also, the relational expression is the cubic function derived by approximating different linear functions that are approximate functions respectively given for specific branching ratio ranges, for example, three ranges of 0 to 12%, 12 to 30%, and 30 to 50%. Therefore, the relational expression based on the measured values can be easily found and the fusion stop timing can be computed with one relational expression, so that the optical fiber coupler 10 with the desired branching ratio can be highly accurately obtained.

The cubic function y = -0.00001x³ + 0.001557x² + 0.08135x is used for the manufacture of the optical fiber coupler 10 of DWC, while the cubic function y = - 0.000025x³ + 0.0025x² + 0.16x is used for the manufacture of the optical fiber coupler 10 of WFC. Therefore, the optical fiber coupler 10 with high accuracy and a desired branching ratio can be favorably and easily obtained.

### [Other Embodiments]

In the manufacture of the optical fiber coupler according to the present invention, the embodiment is not limited to the above-described embodiments, but includes various modifications as long as objects of the present invention can be achieved.

Specifically, cooling adjustment process for curving the fused region 13 may be performed after the fusion process. Further, a heating process only for preheating that does not include drawing process may be performed before the fusion process.

Though the manufacture of the optical fiber coupler 10 in which the two optical fibers 11 and 12 are fused is described, a plurality of fibers may be fused.

As the heater 120, the micro torch 121 that shoots flame 121A is used, any heating method may be used such as a heater that does not shoot a flame 121A, e.g., a ceramic heater, laser light and the like.

Although the cubic function is used as the relational expression that is a basis for determining the fusion stop timing, any function other than the cubic function may be used, which may be linear functions for each range of the branching ratios before deriving the cubic function, and may be a relational expression, without being approximating with linear functions, directly approximated with a curved line including a quadratic function, a cubic function, or an exponential function.

The linear function and the cubic function are not limited to the above mentioned functions. Specifically, although the linear functions are approximated for three ranges, they may be approximated for two ranges or more than three ranges. When the ranges are changed, the degrees of the functions will be changed corresponding to the number of the linear functions, and coefficients of the cubic functions "a", "b", and "c" will be changed as the coefficient of the linear functions are changed. However, with the approximation in the above embodiment, the optical characteristic of the manufactured optical fiber coupler are highly accurate.

The functions as the relational expressions may be based on a branching ratio of any wavelength, although the used functions for each branching ratio range shown in Figs. 11 to 13 are based on the branching ratio CR of the 1550 nm wavelength at the fusion stop points of the manufactured optical fiber coupler 10 that has a characteristic of DWC for branching lights of different wavelengths respectively at the substantially same ratio. Specifically, the function may be derived based on a wavelength of a light that is used in the optical fiber coupler 10.

As for WFC, the function to be derived may be based on the branching ratio CR of a light at a fusion stop point of the manufactured optical fiber coupler 10 with which branching ratio of either one of different wavelengths becomes equal to a predetermine value.

In the present invention, although the branching ratio of 0 to 50 % is mainly explained, the branching ratio of 50 to 100% may be approximated with a function and applied.

The above-described embodiment can be modified appropriately in terms of constitution and procedure without departing from the scope of the present invention.

## Claims

1. A method for manufacturing an optical fiber coupler by heating and fusing at least a part of a contacting part of plural optical fibers, the method including the steps of:
inputting lights of different wavelengths into a first end of any one of the plural optical fibers and reading the lights output from second ends opposite to the first end of the plural optical fibers during the fusing process; and
stopping the fusing process when a value of a branching ratio difference between the lights of respective wavelengths output from the plural optical fibers becomes substantially equal to a value of a branching ratio difference that is found in accordance with a relational expression representing a relationship in a previously manufactured optical fiber coupler between an branching ratio of the light of either one of the wavelengths and a branching ratio difference from the light of the other wavelength.

2. The method according to claim 1, wherein the relational expression is an approximate function representing the value of the branching ratio difference of the lights output from the second ends of the plural optical fibers when the fusing process of an optical fiber coupler is stopped, with which branching ratios of lights of different wavelengths become substantially equal in final form.

3. The method according to claim 1, wherein the relational expression is an approximate function representing the value of the branching ratio difference of the lights output from the second ends of the plural optical fibers when the fusing process of an optical fiber coupler is stopped, with which branching ratio of a light of either one wavelength becomes equal to a predetermined value in final form.

4. The method according to claim 2 or 3, wherein the relational expression is linear functions that are different from each other and respectively given for predetermine ranges of branching ratio.

5. The method according to claim 2 or 3, wherein the relational expression is an approximate curve based on linear functions that are different from each other and respectively given for predetermined ranges of branching ratio.

6. The method according to claim 2 or 3, wherein the relational expression is a cubic function.

7. The method according to claim 6,
wherein the relational expression represents a condition for manufacturing the optical fiber coupler that branches the input lights of different wavelengths at a substantially same ratio and expressed as -0.00001x³ + 0.001557x² + 0.08135x, and
wherein a value of branching ratio difference for stopping the fusing process is computed by assigning a value of branching ratio of the light of the wavelength read during the fusing process as "x".

8. The method according to claim 6,
wherein the relational expression represents a condition for manufacturing the optical fiber coupler that branches an input light of at least one wavelength at a predetermined branching ratio and appropriately branches the other wavelength, the relational expression being expressed as -0.000025x³ + 0.0025x² + 0.16x, and
wherein a value of branching ratio difference for stopping the fusing process is computed by assigning the value of branching ratio of the light of wavelength read during the fusing process as "x".

9. An optical fiber coupler manufacturing apparatus comprising:
a holding section for aligning and holding plural optical fibers substantially in parallel;
a heater for heating at least a part of the plural optical fibers held by the holding section;
a drawing section for drawing the optical fibers heated by the heater; and
a controller for controlling the heater and the drawing section,
wherein the controller includes: a light inputting section for inputting lights of different wavelengths into a first end of at least any one of the optical fibers; a sensor for detecting lights output from second ends opposite to the first end of the plural optical fibers; a storage for storing information regarding a relational expression representing a relationship in a previously manufactured optical fiber coupler between an branching ratio of either one of the wavelengths and a branching ratio difference from the different wavelength; a computing section for computing a branching ratio difference of the lights detected by the sensor and outputting a predetermined control signal when recognizing that a value of the computed branching ratio difference becomes substantially equal to a value of branching ratio difference which is found based on the relational expression stored in the storage; and an operation controller for stopping the heating by the heater and the drawing by the drawing section.

10. An optical fiber coupler manufacturing apparatus that implements the method according to any one of claims 1 to 8.

11. An optical fiber coupler that is manufactured by implementing the method according to any one of claims 1 to 8.
